# FASCICULE DE BREVET EUROPEEN

(11) **EP 3 385 136 B1**
(45) Date de publication et mention de la délivrance du brevet: **29.04.2020**
(21) Numéro de dépôt: 18165342.9
(22) Date de dépôt: 30.03.2018
(51) Int. Cl.: B60T 13/36, B60T 13/66, B60T 17/16, G05G 1/04, B61H 13/02

(54) **SYSTÈME DE DÉVERROUILLAGE D'UN FREIN D'UN VÉHICULE FERROVIAIRE ET SYSTÈME DE FREINAGE COMPRENANT UN TEL SYSTÈME DE DÉVERROUILLAGE**
DEBLOCKIERSYSTEM EINER BREMSE EINES SCHIENENFAHRZEUGS, UND BREMSSYSTEM, DAS EIN SOLCHES DEBLOCKIERSYSTEM UMFASST
BRAKE UNLOCKING SYSTEM OF A RAILWAY VEHICLE AND BRAKING SYSTEM COMPRISING SUCH UNLOCKING SYSTEM

(30) Priorité: 03.04.2017 FR 1752850
(43) Date de publication de la demande: 10.10.2018
(73) Titulaire: ALSTOM Transport Technologies, 93400 Saint-Ouen (FR)
(72) Inventeur: ROIZOT, Romaric, 71200 SAINT SERNIN DU BOIS (FR); CARON, Bruno, 71200 SAINT SERNIN DU BOIS (FR)
(74) Mandataire: Lavoix

(56) Documents cités:
- EP-A1- 2 826 683
- CN-U- 205 836 839

## Description

La présente invention concerne un système de déverrouillage d'un frein d'un véhicule ferroviaire comprenant un dispositif de déverrouillage supporté par un support.

L'invention concerne également un système de freinage comprenant un tel système de déverrouillage et un frein de stationnement.

L'invention s'applique plus particulièrement aux véhicules ferroviaires du type métro, trains interrégionaux et autres.

Le document CN 205 836 839 U décrit un système relié à un frein d'un véhicule ferroviaire. Le document EP 2 826 683 A1 décrit un système de freinage ferroviaire pour véhicule ferroviaire.

Lorsque le frein de stationnement du véhicule est verrouillé, il n'est pas possible de déplacer le véhicule. En opération, le déverrouillage du frein de stationnement est effectué sur demande du conducteur qui génère une alimentation en air comprimé de l'unité de frein. Il est en outre prévu de permettre le déverrouillage du frein si le système pneumatique du véhicule ferroviaire n'est pas opérant ou si requis dans le cadre des opérations de maintenance. Pour ce faire, un système de déverrouillage manuel est installé.

Il est connu un système de déverrouillage du type précité. Pour déverrouiller le frein manuellement, une force est appliquée au dispositif de déverrouillage, par exemple par force manuelle d'un opérateur. Cette force appliquée n'est cependant pas suffisante pour déverrouiller le frein. La force appliquée est donc transformée. La transformation dans le système de déverrouillage de l'état de la technique est effectuée par un dispositif proche de l'unité de frein du véhicule ferroviaire.

Avec le système de déverrouillage du type précité, une calibration est nécessaire pour assurer une transformation appropriée de la force appliquée. Par exemple en fonction de la longueur et du frottement du câble, la transformation de la force est différente. Des mises au point sont alors nécessaires dans le système de déverrouillage du type précité.

En outre, les composants du système de déverrouillage de l'état de la technique sont exposés aux impacts, car ils sont disposés dans un bogie du véhicule ferroviaire proche des rails au voisinage du frein. En conséquence, ces composants vieillissent plus rapidement et ont donc une durée de vie faible.

L'un des buts de l'invention est de pallier ces inconvénients en proposant un système de déverrouillage comprenant un dispositif de déverrouillage permettant d'omettre la calibration du système de déverrouillage.

A cet effet, l'invention concerne un système de déverrouillage d'un frein d'un véhicule ferroviaire, dans lequel un câble s'étend selon un axe de câble entre une première extrémité et une deuxième extrémité, la première extrémité étant reliée au frein, un dispositif de déverrouillage relié à la deuxième extrémité du câble, le dispositif de déverrouillage comportant une partie de préhension, un support supportant le dispositif de déverrouillage, le dispositif de déverrouillage étant mobile en rotation par rapport au support autour d'un axe de rotation sensiblement parallèle à un axe, l'axe s'étendant, à partir de la deuxième extrémité du câble, sensiblement perpendiculaire à l'axe de câble considéré au niveau de la deuxième extrémité du câble, et la distance minimale entre l'axe de rotation et la partie de préhension est plus grande que la distance minimale entre l'axe de rotation et la deuxième extrémité du câble.

Le système de déverrouillage selon l'invention est localisé à l'endroit où l'opérateur applique une force pour déverrouiller le frein. Une transformation de la force appliquée au niveau du frein n'est pas nécessaire avec le système de déverrouillage selon l'invention. Ainsi, une calibration pour assurer une transformation appropriée de la force appliquée n'est pas nécessaire dans le système selon l'invention.

Le dispositif de déverrouillage est situé, par exemple, dans la cabine de conduite ou sur une zone moins exposée du bogie. En conséquence, il est mieux protégé contre les impacts et le dispositif de déverrouillage est moins exposé aux salissures.

Selon d'autres caractéristiques du système de déverrouillage selon l'invention, prises isolément ou selon toutes les combinaisons techniquement possibles :
- le dispositif de déverrouillage est mobile entre une position de repos dans laquelle le câble n'est pas sollicité par le dispositif de déverrouillage, et une position de déverrouillage dans laquelle de dispositif de déverrouillage exerce une traction selon la direction de l'axe de câble sur le câble ;
- le système de déverrouillage comporte en outre un élément de rappel fixé d'une part au support et d'autre part au dispositif de déverrouillage, l'élément de rappel contraignant le dispositif de déverrouillage vers la position de repos ;
- la deuxième extrémité du câble est fixé à un élément d'actionnement, le dispositif de déverrouillage exerçant une force de traction sur l'élément d'actionnement en position de déverrouillage ;
- le support comprend au moins un guide, l'élément d'actionnement étant mobile en translation dans ledit guide sous l'effet de la rotation du dispositif de déverrouillage entre la position de repos et la position de déverrouillage ;
- le dispositif de déverrouillage comprend au moins une surface de glissement pour l'élément d'actionnement, de sorte que lors de la rotation du dispositif de déverrouillage, l'élément d'actionnement glisse sur la surface de glissement.
- le dispositif de déverrouillage est réalisé en une pièce ;
- la partie de préhension du dispositif de déverrouillage est une poignée.

L'invention a également pour objet un système de freinage destiné à être intégré dans un véhicule ferroviaire, comportant un frein de stationnement, et un système de déverrouillage du frein de stationnement du type précité.

Le système de freinage selon l'invention permet de déverrouiller un frein de stationnement d'un véhicule ferroviaire. Par exemple, si le système de freinage n'est pas alimenté par le circuit pneumatique, le déverrouillage est effectué manuellement par le dispositif de déverrouillage du système de freinage.

Selon une autre caractéristique du système de freinage selon l'invention, la première extrémité du câble est reliée directement au frein de stationnement.

D'autres aspects et avantages de l'invention apparaîtront à la lecture de la description qui suit, donnée à titre d'exemple et faite en référence aux dessins annexés, dans lesquels :
- la figure 1 est une représentation schématique en perspective du système de freinage selon l'invention, en position de repos,
- la figure 2 est une représentation schématique en perspective du système de freinage selon l'invention, en position de déverrouillage, et
- la figure 3 est une représentation schématique en perspective du dispositif de déverrouillage selon l'invention.

Dans la suite de la description, l'expression « sensiblement égal à » s'entend par une relation d'égalité à plus ou moins 10%, de préférence à plus ou moins 5%. En outre, l'expression « sensiblement perpendiculaire à » s'entend par une relation de perpendicularité à plus ou moins 10 dégrées, de préférence à plus ou moins 5 dégrées.

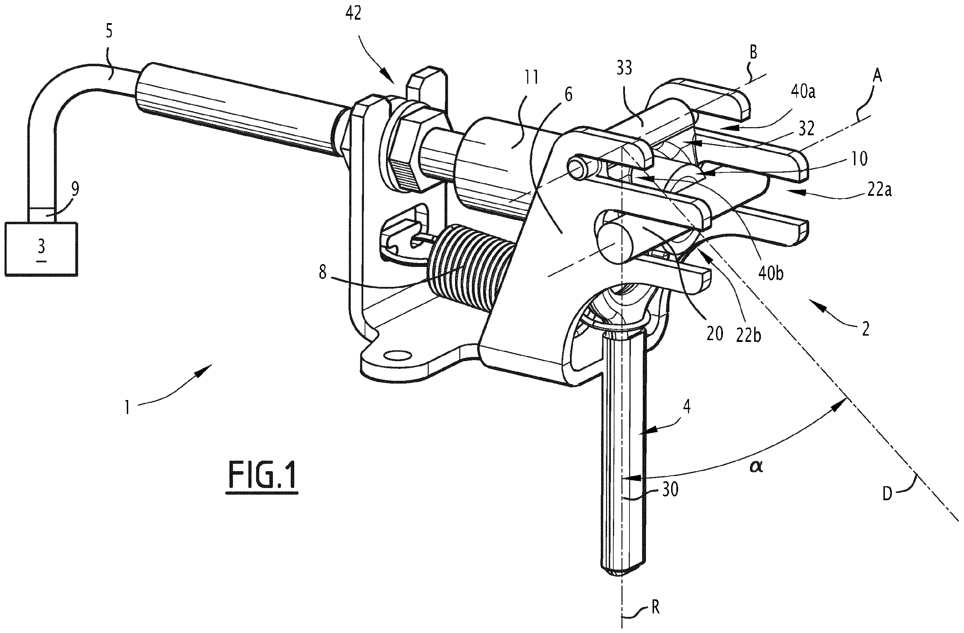

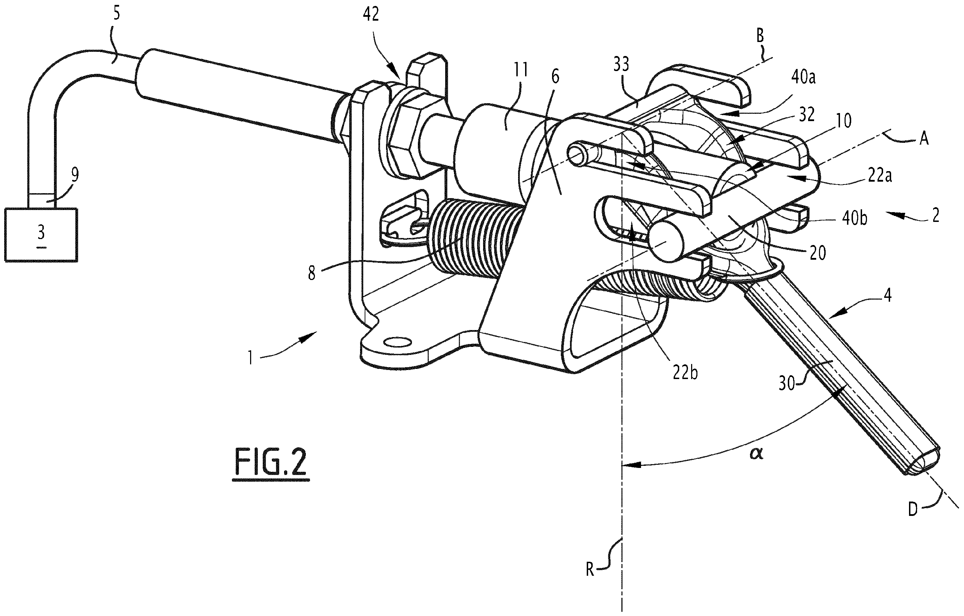

En référence aux figures 1 et 2, on décrit un système de freinage 1 comprenant un système de déverrouillage 2 et un frein 3 d'un véhicule ferroviaire. Le système de déverrouillage 2 comprend un dispositif de déverrouillage 4, un câble 5, un support 6 supportant le dispositif de déverrouillage 4 et un élément de rappel 8.

Le câble 5 comprend une première extrémité 9, qui est reliée au frein du véhicule ferroviaire 3. Le câble 5 comprend en outre une deuxième extrémité 10 qui est reliée à un élément d'actionnement 20.

Le frein 3 est connu en soi et est par exemple un frein de stationnement d'un véhicule ferroviaire. Il ne sera donc pas décrit plus en détail ici.

De préférence, la première extrémité 9 du câble 5 est reliée directement au frein de stationnement. Une force de traction est donc transférée par le câble 5 directement au frein 3, sans transformation de la force par un bras de levier au niveau du frein 3.

Le câble 5 s'étend selon un axe de câble entre la première extrémité 9 et la deuxième extrémité 10. Le câble 5 est par exemple du type Bowden. Le câble 5 a pour but de transmettre une force qui est appliquée à la deuxième extrémité 10 vers la première extrémité 9. Le câble 5 est, à partir de la deuxième extrémité 10 du câble 5, gainé par une gaine de câble 11. Le câble 5 est mobile selon l'axe de câble par rapport à la gaine de câble 11.

Pour transmettre la force qui est appliquée à la deuxième extrémité 10 vers la première extrémité 9, la deuxième extrémité 10 du câble 5 est fixée à l'élément d'actionnement 20 qui est en contact avec le dispositif de déverrouillage 4. L'élément d'actionnement 20 est donc configuré pour transmettre une force du dispositif de déverrouillage 4 vers le câble 5. L'élément d'actionnement 20 a la fonction d'un entraîneur.

L'élément d'actionnement 20 s'étend, à la deuxième extrémité 10 du câble 5, selon un axe A sensiblement perpendiculaire à l'axe de câble considéré au niveau de la deuxième extrémité 10 du câble 5.

Le dispositif de déverrouillage 4 comprend une partie de préhension 30 et une partie de déplacement 32. La partie de préhension 30 comprend par exemple une poignée ou une manette. La partie de déplacement 32 comporte un arbre 33 mobile en rotation selon un axe de rotation B. L'axe de rotation B est sensiblement parallèle à l'axe A. L'axe de rotation B n'est pas confondu avec l'axe A, l'axe de rotation B et l'axe A ne comportent donc pas des points communs. L'arbre 33 de rotation est supporté par le support 6 et est mobile en rotation par rapport au support 6.

Le dispositif de déverrouillage 4 est donc mobile par rapport au support 6 en rotation autour de l'axe de rotation B entre une position de repos R (figure 1) dans laquelle le câble 5 n'est pas sollicité par le dispositif de déverrouillage 4, et une position de déverrouillage D (figure 2), dans laquelle le dispositif de déverrouillage 4 exerce la force de traction sur le l'élément d'actionnement 20. Entre la position de repos R et la position de déverrouillage D, le dispositif de déverrouillage 4 se déplace d'un angle a, par exemple compris entre 10 est 120 degrés, de préférence sensiblement égal à 45 degrés.

Le dispositif de déverrouillage 4 est par exemple formé d'une seule pièce. Le matériau est par exemple un métal, un plastique ou un matériau composite. En complément facultatif, la partie de préhension 30 comporte une surface additionnelle d'un matériau distinct du matériau du dispositif de déverrouillage 4. Le matériau additionnel est par exemple caoutchouc pour améliorer la maniabilité de la partie de préhension 30.

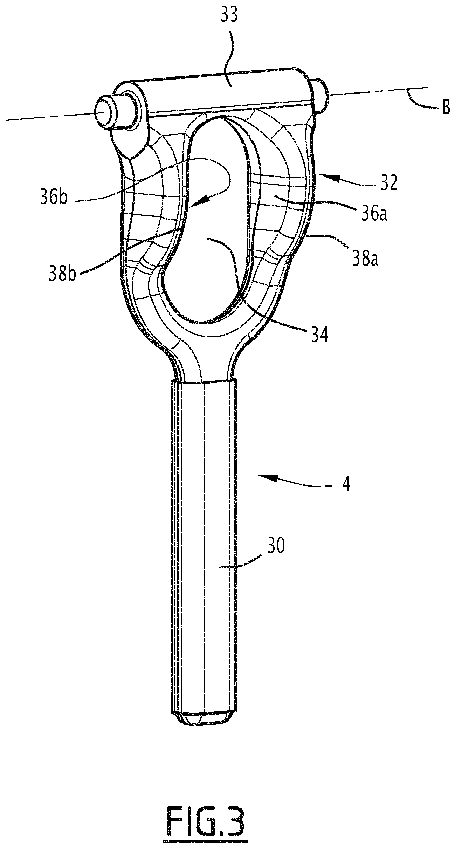

En référence de la figure 3, la partie de déplacement 32 du dispositif de déverrouillage 4 comporte en outre un orifice 34 configuré pour accueillir la gaine de câble 11. L'orifice s'étend entre des parois 36a, 36b qui permettent le passage de la gaine de câble 11.

La distance minimale entre l'axe de rotation B et la partie de préhension 30 est plus grande que la distance minimale entre l'axe de rotation B et la deuxième extrémité 10 du câble 5. Le dispositif de déverrouillage 4 comporte donc un bras de levier. Par ce bras de levier, le dispositif de déverrouillage 4 est apte à transformer la force appliquée en force de traction qui est requise et suffisante pour déverrouiller le frein 3.

Selon un plan sensiblement perpendiculaire aux parois 36a, 36b, la partie de déplacement 32 du dispositif de déverrouillage 4 comprend des surfaces de glissement 38a, 38b destinées à être en contact avec l'élément d'actionnement 20. Les surfaces de glissement 38a, 38b sont arquées pour permettre un glissement de l'élément d'actionnement 20 sur les surfaces de glissement 38a, 38b du dispositif de déverrouillage 4.

Le support 6 comprend des guides 22a, 22b pour le guidage de l'élément d'actionnement 20 relié à la deuxième extrémité 10 du câble 5. Les guides 22a, 22b constituent des rainures dans le support 6. L'élément d'actionnement 20 est donc mobile en translation dans les guides 22a, 22b. En outre, le support 6 comprend des rainures 40a, 40b pour maintenir l'arbre 33 de rotation selon la direction de l'axe de rotation B. En outre, le support comprend une rainure 42 de fixation pour fixer la gaine de câble 11 au support 6.

L'élément de rappel 8 est fixé au support 6 et au dispositif de déverrouillage 4. Par exemple, l'élément de rappel 8 est un ressort de rappel. Il est configuré pour contraindre le dispositif de déverrouillage 4 dans la position de repos R. L'élément de rappel 8 est donc propre pour appliquer une force de rappel au dispositif de déverrouillage 4 afin de pivoter le dispositif de déverrouillage 4 autour de l'axe de rotation B.

Le fonctionnement du système de freinage 1, et en particulier du système de déverrouillage 2, va être à présent décrit plus en détail.

La force qui est requise pour déverrouiller le frein 3 est comprise entre une force minimale et une force maximale. Si une force inférieure à la force requise est appliquée, le frein 3 n'est pas déverrouillé. Si la transformation de la force appliquée fournie une force supérieure à la force requise, il est possible qu'un déverrouillage indésirable du frein 3 se produise. En général, la force requise pour déverrouiller le frein 3 est plus est élevée que la force appliquée. La force appliquée ne suffit donc pas pour déverrouiller le frein à la main en tirant la partie de préhension 30. Pour obtenir la force requise pour déverrouiller le frein 3, une transformation appropriée de la force appliquée est donc effectuée.

Pour déverrouiller manuellement le frein 3, un opérateur tire la partie de préhension 30 du dispositif de déverrouillage 4. L'opérateur applique donc la force appliquée au dispositif de déverrouillage 4.

Selon la formule *W* = *F · u,* le travail de la force *W* est la force appliquée *F* multipliée par le déplacement *u* du dispositif de déverrouillage 4. Une rotation du dispositif de déverrouillage 4 autour de l'axe de rotation B implique une rotation de la partie de préhension 30 et une rotation de la partie de déplacement 32. La distance de déplacement de la partie de préhension 30 est plus grande que la distance de déplacement de la partie de déplacement 32. En gardant le travail de la force W constant, la force appliquée à la partie de préhension 30 est donc plus faible que la force requise, qui est appliquée à la partie de déplacement 32. Le dispositif de déverrouillage 4 comprend donc un bras le levier, et une transformation de la force appliquée est effectuée.

Lorsque le frein 3 est déverrouillé et qu'aucune force n'est appliquée sur le câble 5 par l'élément d'actionnement 20, le dispositif de déverrouillage est dans la position de repos R. Pour déverrouiller le frein 3 manuellement, un opérateur applique la force appliquée à la partie de préhension 30 en faisant tourner le dispositif de déverrouillage 4 de la position de repos R vers la position de déverrouillage D. Il déplace alors le dispositif de déverrouillage 4 de l'angle α à partir de la position de repos R vers la position de déverrouillage D. Le dispositif de déverrouillage 4 tourne autour de l'axe de rotation B.

Au cours de ce déplacement, le dispositif de déverrouillage 4 entre en contact avec l'élément d'actionnement 20 et déplace celui-ci dans les guides 22a, 22b. Par le bras de levier du dispositif de déverrouillage 4, la force appliquée est transformée en force de traction qui exerce une traction sur le câble 5 par l'élément d'actionnement 20. Par la force de traction, le frein 3 est déverrouillé.

Si le frein 3 est déverrouillé, l'opérateur lâche le dispositif de déverrouillage 4 et n'applique plus de force au dispositif de déverrouillage 4. L'élément de rappel 8 contraignant le dispositif de déverrouillage 4 vers la position de repos R, et la force de traction n'est plus appliquée au câble 5.

Le frein 3 reste en état déverrouillé. Pour verrouiller le frein 3, le système de freinage 1 est alimenté par un courant d'alimentation pour verrouiller le frein 3 par un circuit pneumatique non représenté. De manière connue, le verrouillage du frein se fait par exemple par injection d'air comprimé dans l'unité de frein.

On conçoit ainsi que le système de déverrouillage 2 selon l'invention permet d'omettre la calibration du système de déverrouillage, car la force obtenu à la deuxième extrémité 10 du câble 5 par le dispositif de déverrouillage 4 permet de déverrouiller le frein 3 grâce au bras de levier appliqué entre le dispositif de déverrouillage 4 et l'élément d'actionnement 20. En outre, avec le dispositif de déverrouillage 4 installé dans l'endroit d'application de la force par l'opérateur, par exemple dans la cabine du conducteur, la durée de vie du dispositif de déverrouillage 4 prolongée, car le dispositif de déverrouillage 4 est protégée contre les impacts et des salissures.

## Revendications

1. Système de déverrouillage (2) d'un frein (3) d'un véhicule ferroviaire comprenant :
- un câble (5) s'étendant selon un axe de câble entre une première extrémité (9) et une deuxième extrémité (10), la première extrémité (9) étant reliée au frein (3),
- un dispositif de déverrouillage (4) relié à la deuxième extrémité (10) du câble (5), le dispositif de déverrouillage (4) comportant une partie de préhension (30),
- un support (6) supportant le dispositif de déverrouillage (4),
**caractérisé en ce que**
- le dispositif de déverrouillage (4) est mobile en rotation par rapport au support (6) autour d'un axe de rotation (B) sensiblement parallèle à un axe (A), l'axe (A) s'étendant, à partir de la deuxième extrémité (10) du câble (5), sensiblement perpendiculaire à l'axe de câble considéré au niveau de la deuxième extrémité (10) du câble (5), et
- la distance minimale entre l'axe de rotation (B) et la partie de préhension (30) est plus grande que la distance minimale entre l'axe de rotation (B) et la deuxième extrémité (10) du câble (5),
le dispositif de déverrouillage (4) étant mobile entre une position de repos (R) dans laquelle le câble (5) n'est pas sollicité par le dispositif de déverrouillage (4), et une position de déverrouillage (D) dans laquelle de dispositif de déverrouillage (4) exerce une traction selon la direction de l'axe de câble sur le câble (5),
la deuxième extrémité (10) du câble (5) étant fixée à un élément d'actionnement (20), le dispositif de déverrouillage (4) exerçant une force de traction sur l'élément d'actionnement (20) en position de déverrouillage (D),
le support (6) comprenant au moins un guide (22a, 22b), l'élément d'actionnement (20) étant mobile en translation dans ledit guide (22a, 22b) sous l'effet de la rotation du dispositif de déverrouillage (4) entre la position de repos (R) et la position de déverrouillage (D).

2. Système de déverrouillage (2) selon la revendication 1, dans lequel le système de déverrouillage (2) comporte en outre un élément de rappel (8) fixé d'une part au support (6) et d'autre part au dispositif de déverrouillage (4), l'élément de rappel (8) contraignant le dispositif de déverrouillage (4) vers la position de repos (R).

3. Système de déverrouillage (2) selon la revendication 1 ou 2, dans lequel le dispositif de déverrouillage (4) comprend au moins une surface de glissement (38a, 38b) pour l'élément d'actionnement (20), de sorte que lors de la rotation du dispositif de déverrouillage (4), l'élément d'actionnement (20) glisse sur la surface de glissement (38a, 38b).

4. Système de déverrouillage (2) selon l'une quelconque des revendications précédentes, dans lequel le dispositif de déverrouillage (4) est réalisé en une pièce.

5. Système de déverrouillage (2) selon l'une quelconque des revendications précédentes, dans lequel la partie de préhension (30) du dispositif de déverrouillage (4) est une poignée.

6. Système de freinage (1) destiné à être intégré dans un véhicule ferroviaire, comportant :
- un frein de stationnement (3), et
- un système de déverrouillage (2) du frein de stationnement (3),
**caractérisé en ce que** le système de déverrouillage (2) est selon l'une quelconque des revendications précédentes.

7. Système de freinage (1) selon la revendication 6, dans lequel la première extrémité (9) du câble (5) est reliée directement au frein de stationnement (3).

## Patentansprüche

1. System zur Entriegelung (2) einer Bremse (3) eines Schienenfahrzeugs, aufweisend:
- ein Seil (5), das sich entlang einer Seilachse zwischen einem ersten Ende (9) und einem zweiten Ende (10) erstreckt, wobei das erste Ende (9) mit der Bremse (3) verbunden ist,
- eine Entriegelungsvorrichtung (4), die mit dem zweiten Ende (10) des Seils (5) verbunden ist, wobei die Entriegelungsvorrichtung (4) einen Griffabschnitt (30) aufweist,
- einen Halter (6), der die Entriegelungsvorrichtung (4) hält, **dadurch gekennzeichnet, dass**
- die Entriegelungsvorrichtung (4) bezüglich des Halters (6) um eine Drehachse (B) drehbewegbar ist, die im Wesentlichen parallel zu einer Achse (A) ist, wobei die Achse (A) sich ausgehend von dem zweiten Ende (10) des Seils (5) im Wesentlichen senkrecht zu der Seilachse erstreckt betrachtet auf Höhe des zweiten Endes (10) des Seils (5), und
- der Minimalabstand zwischen der Drehachse (B) und dem Griffabschnitt (30) größer ist als der Minimalabstand zwischen der Drehachse (B) und dem zweiten Ende (10) des Seils (5), wobei die Entriegelungsvorrichtung (4) bewegbar ist zwischen einer Ruheposition (R), in welcher das Seil (5) nicht von der Entriegelungsvorrichtung (4) gezogen ist, und einer Entriegelungsposition (D), in welcher die Entriegelungsvorrichtung (4) auf das Seil (5) einen Zug entlang der Richtung der Seilachse ausübt,
wobei das zweite Ende (10) des Seils (5) an einem Betätigungselement (20) befestigt ist, wobei die Entriegelungsvorrichtung (4) eine Zugkraft auf das Betätigungselement (20) in Entriegelungsposition (D) ausübt, wobei der Halter (6) aufweist wenigstens eine Führung (22a, 22b), wobei das Betätigungselement (20) in der Führung (22a, 22b) translationsbewegbar ist unter der Wirkung der Drehung der Entriegelungsvorrichtung (4) zwischen der Ruheposition (R) und der Entriegelungsposition (D).

2. System zur Entriegelung (2) gemäß Anspruch 1, wobei das System zur Entriegelung (2) ferner aufweist ein Rückstellelement (8), das einerseits am Halter (6) und andererseits an der Entriegelungsvorrichtung (4) befestigt ist, wobei das Rückstellelement (8) die Entriegelungsvorrichtung (4) zu der Ruheposition (R) hin zwingt.

3. System zur Entriegelung (2) gemäß Anspruch 1 oder 2, wobei die Entriegelungsvorrichtung (4) wenigstens eine Gleitfläche (28a, 38b) für das Betätigungselement (20) aufweist, sodass während der Drehung der Entriegelungsvorrichtung (4) das Betätigungselement (20) auf der Gleitfläche (38a, 38b) gleitet.

4. System zur Entriegelung (2) gemäß irgendeinem der vorhergehenden Ansprüche, wobei die Entriegelungsvorrichtung (4) aus einem Stück realisiert ist.

5. System zur Entriegelung (2) gemäß irgendeinem der vorhergehenden Ansprüche, wobei der Griffabschnitt (30) der Entriegelungsvorrichtung (4) ein Handgriff ist.

6. Bremssystem (1), das dazu bestimmt ist, in ein Schienenfahrzeug integriert zu sein, aufweisend:
- eine Parkbremse (3) und
- ein System zur Entriegelung (2) der Parkbremse (3),
**dadurch gekennzeichnet, dass** das System zur Entriegelung (2) gemäß irgendeinem der vorhergehenden Ansprüche ist.

7. Bremssystem (1) gemäß Anspruch 6, wobei das erste Ende (9) des Seils (5) direkt mit der Parkbremse (3) verbunden ist.

## Claims

1. Unlocking system (2) for a brake (3) of a railway vehicle, comprising:
- a cable (5) extending along a cable axis between a first end (9) and a second end (10), the first end (9) being connected to the brake (3),
- an unlocking device (4) connected to the second end (10) of the cable (5), the unlocking device (4) comprising a grip part (30),
- a support (6) supporting the unlocking device (4),
**characterised in that**
- the unlocking device (4) is rotatable relative to the support (6) about an axis of rotation (B) which is substantially parallel to an axis (A), the axis (A) extending, starting from the second end (10) of the cable (5), substantially perpendicularly to the cable axis considered in the region of the second end (10) of the cable (5), and
- the minimum distance between the axis of rotation (B) and the grip part (30) is greater than the minimum distance between the axis of rotation (B) and the second end (10) of the cable (5),
the unlocking device (4) being movable between a rest position (R), in which no stress is exerted on the cable (5) by the unlocking device (4), and an unlocking position (D), in which the unlocking device (4) exerts a pull in the direction of the cable axis on the cable (5),
the second end (10) of the cable (5) being fixed to an actuating element (20), the unlocking device (4) exerting a pulling force on the actuating element (20) in the unlocking position (D),
the support (6) comprising at least one guide (22a, 22b), the actuating element (20) being movable by translation in said guide (22a, 22b) under the effect of the rotation of the unlocking device (4) between the rest position (R) and the unlocking position (D).

2. Unlocking system (2) according to claim 1, wherein the unlocking system (2) further comprises a return element (8) fixed on the one hand to the support (6) and on the other hand to the unlocking device (4), the return element (8) urging the unlocking device (4) towards the rest position (R).

3. Unlocking system (2) according to claim 1 or 2, wherein the unlocking device (4) comprises at least one sliding surface (38a, 38b) for the actuating element (20), so that, on rotation of the unlocking device (4), the actuating element (20) slides on the sliding surface (38a, 38b).

4. Unlocking system (2) according to any one of the preceding claims, wherein the unlocking device (4) is produced in one piece.

5. Unlocking system (2) according to any one of the preceding claims, wherein the grip part (30) of the unlocking device (4) is a handle.

6. Braking system (1) for integration into a railway vehicle, comprising:
- a parking brake (3), and
- an unlocking system (2) for the parking brake (3),
**characterised in that** the unlocking system (2) is in accordance with any one of the preceding claims.

7. Braking system (1) according to claim 6, wherein the first end (9) of the cable (5) is connected directly to the parking brake (3).
